Europäisches Patentamt

European Patent Office

Office européen des brevets

(19)

(11) Veröffentlichungsnummer : **0 036 605**
**B1**

(12) # EUROPÄISCHE PATENTSCHRIFT

(45) Veröffentlichungstag der Patentschrift :
08.02.84

(21) Anmeldenummer : 81101946.2

(22) Anmeldetag : 16.03.81

(51) Int. Cl.³ : **H 04 L   9/02**, H 04 L   5/22,
H 04 J   3/06, H 03 K   3/84

(54) **PCM-System mit sendeseitigem Verwürfler und empfangsseitigem Entwürfler.**

(30) Priorität : 21.03.80 DE 3010969

(43) Veröffentlichungstag der Anmeldung :
30.09.81 Patentblatt 81/39

(45) Bekanntmachung des Hinweises auf die Patenterteilung : 08.02.84 Patentblatt 84/06

(84) Benannte Vertragsstaaten :
AT BE CH DE FR GB IT LI LU NL SE

(56) Entgegenhaltungen :
DE-A- 2 622 660
DE-B- 2 341 627
DE-B- 2 633 516
DE-B- 2 634 353
NACHRICHTENTECHNISCHE ZEITSCHRIFT, 27. Jahrgang, Heft 12, Dezember 1974 Berlin H. MÜLLER "Bit
Sequence Independence Through Scramblers in
Digital Communication Systems" Seiten 475 bis 479

(73) Patentinhaber : **SIEMENS AKTIENGESELLSCHAFT**
**Berlin und München Wittelsbacherplatz 2**
**D-8000 München 2 (DE)**

(72) Erfinder : **Müller, Horst, Dipl.-Ing.**
**Dammstrasse 11**
**D-8021 Hohenschäftlarn (DE)**

PCM-System mit sendeseitigem Verwürfler und empfangsseitigem Entwürfler.

Die Erfindung bezieht sich auf ein PCM-System mit einem Sendeteil zum parallelen Verwürfeln von n binären Digitalsignalen die jeweils einem ersten Eingang von n Modulo-2-Addierern zugeführt sind, deren Ausgänge zur Bildung eines seriellen Binärsignals mit den Eingängen eines Multiplexers verbunden sind und deren zweite Eingänge an die Ausgänge eines Verwürflers angeschlossen sind, die von den Kippstufen eines rückgekoppelten Schieberegisters gebildet werden, und mit einem dem Sendeteil entsprechenden Empfangsteil, der einen Demultiplexer und einen synchronisierten Entwürfler enthält.

Bei der Übertragung eines pulscodemodulierten Signales (PCM) wird angestrebt, daß für Synchronisierzwecke häufige Wechsel zwischen den beiden Signalzuständen auf der Übertragungsstrecke erfolgen. Ist keine besondere Codierung des zu übertragenden Digitalsignals vorgenommen worden, kann es zur Aussendung sogenannter Dauerlagen kommen. Hierunter wird ein Signal verstanden, das der logischen Null oder der logischen Eins entspricht. Um diese Dauerlagen zu vermeiden, werden Verwürfler (Scrambler) eingesetzt. Diese erzeugen eine Pseudo-Zufallsfolge von Nullen und Einsen, die zu dem binären Digitalsignal hinzuaddiert wird. Auf der Empfangsseite ist die Entwürfelung des Digitalsignals notwendig. Hierzu wird bei binärer Übertragung ein Entwürfler (Descrambler) verwendet, der dieselbe Pseudo-Zufallsfolge wie der Verwürfler erzeugt. Für hohe Übertragungsgeschwindigkeiten werden Verwürfler eingesetzt, die gleichzeitig mehrere parallel vorliegende Digitalsignale verwürfeln, die dann im Zeitmultiplexverfahren ausgesendet werden.

Aus der DE-PS 26 34 353 ist ein Verwürfler bekannt (Fig. 3), der zur Parallelverwürfelung mehrerer digitaler Signale verwendet wird. Der hier beschriebene Verwürfler benötigt jedoch mehrere Modulo-2-Addierer zwischen den verschiedenen Kippstufen eines Schieberegisters. Hierdurch ist nicht nur ein größerer schaltungsmäßiger Aufwand erforderlich, durch die Laufzeit der zwischengeschalteten Modulo-2-Addierer eignet sich dieser Verwürfler aus nicht für extrem hohe Geschwindigkeiten.

Aus den Siemens-Forschungs- und Entwicklungsberichten, Band 3, 1974, Nr. 4, Seite 218 bis 224, Springer-Verlag, ist auf Seite 223 ein Verwürfler angegeben, der nur einen Modulo-2-Addierer in der Rückführung des Schieberegisters benötigt. Die gewünschte Pseudo-Zufallsfolge wird von mehreren Modulo-2-Addierern erzeugt, die an unterschiedliche Ausgänge der einzelnen Kippstufen des Schieberegisters angeschlossen sind. Durch Multiplexen dieser Signale wird eine Pseudo-Zufallsfolge erzeugt. Auch diese Schaltung eignet sich nicht für extrem hohe Geschwindigkeiten, da für die zusätzlichen Modulo-2-Addierer ebenfalls Laufzeit benötigt wird.

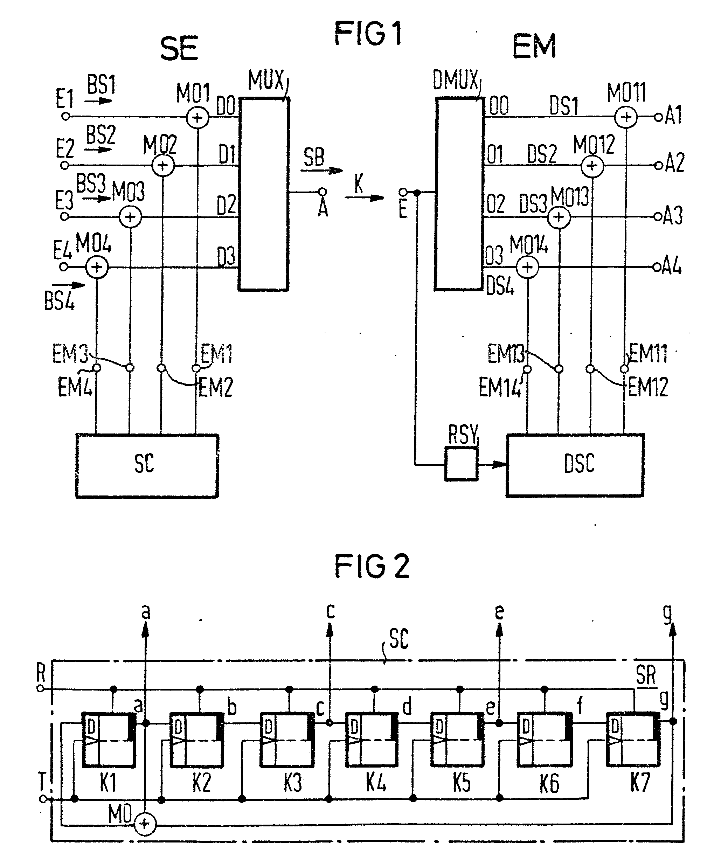

In · der DE-AS 23 41 627 ist in Fig. 1 ein Paralleldatenverschlüßler dargestellt, der mehrere Daten mit Pseudo-Zufallssignalen gleichzeitig verschlüsselt, die von verschiedenen Kippstufen und von einem Modulo-2-Addierer eines den Pseudo-Zufallsgenerator bildenden rückgekoppelten Schieberegisters abgenommen werden. Über einen weiteren Modulo-2-Addierer, der auch der Verwürfelung dient, erfolgt die Rückkopplung auf den Eingang des Schieberegisters. Für maximale Geschwindigkeiten ist dieser Zufallsgenerator nicht geeignet, da sich in seinem Rückkopplungszug die Laufzeiten von zwei Modulo-2-Addierern bemerkbar machen. Da der empfangsseitige Entwürfler synchronisiert werden muß, ist die Bildung einer Synchronisierfolge im Sendeteil erforderlich. Diese wurde bisher separat erzeugt und anstelle der verwürfelten Binärsignale übertragen, wie z. B. in der NTZ, 1974, Heft 12, Seiten 475-479, Fig. 6 dargestellt ist.

Aufgabe der Erfindung ist es, ein für hohe Datenraten geeignetes PCM-System mit einem Verwürfler und einer Einrichtung zur Erzeugung einer Synchronisierfolge anzugeben.

Ausgehend vom einleitend beschriebenen Stand der Technik wird diese Aufgabe dadurch gelöst, daß im Rückkopplungsweg des Schieberegisters nur ein Modulo-2-Addierer liegt, daß zur Erzeugung einer vorgegebenen Synchronisierfolge die Aussendung der binären Digitalsignale gesperrt wird und daß die Kippstufen Setzeingänge aufweisen, die über einen gemeinsamen Rücksetzeingang zusammengefaßt sind und zur Erzeugung der Synchronisierfolge durch einen Impuls so eingestellt werden, daß die vom Verwürfler abgegebenen Pseudo-Zufallsfolgen nach ihrer Zusammenfassung am Ausgang des Multiplexers die Synchronisierfolge bilden.

Vorteilhaft an dem Verwürfler ist es, daß er mit minimalem Schaltungsaufwand auskommt und minimale Laufzeiten aufweist. Es reicht aus, wenn das durch Multiplexbildung gewonnene serielle Binärsignal nur mit einer angenäherten Pseudo-Zufallsfolge verwürfelt wird.

Diese Lösung hat außerdem den Vorteil, daß der Verwürfler gleichzeitig zur Erzeugung einer Synchronisierfolge verwendet wird. Diese Synchronisierfolge wird bei einem PCM-System meist als Rahmenkennungswort bezeichnet und jeweils am Anfang jedes Zeichenrahmens ausgesendet. Auf der Empfangsseite dient das Rahmenkennungswort zur Synchronisierung des Entwürflers.

Eine Lösungsvariante ist dadurch gekennzeichnet, daß mindestens eine Umschaltvorrichtung vorgesehen ist, die zur Erzeugung einer vorgegebenen Synchronisierfolge Dauerlagen mit denselben Pseudo-Zufallsfolgen wie bei der Aussendung binärer Digitalsignale verwendet, diese jedoch in zeitlich veränderter Form miteinander verschachtelt.

Bei dieser Variante entstehen unterschiedliche serielle Verwürfelungsfolgen bei der Aussendung von binären Digitalsignalen und bei der Aussendung der Synchronisierfolge. Dies wird dadurch erreicht, daß die Ausgänge anderer Kippstufen des Verwürflers zum Verwürfeln, also zeitlich anders verschobene Pseudo-Zufallsfolgen, verwendet werden, oder daß die verwürfelten Dauerlagen in anderer Weise ineinander zur Erzeugung der Synchronisierfolge verschachtelt werden. Dies führt in beiden Fällen zu einer anderen zeitlichen Verschachtelung derselben Pseudo-Zufallsfolgen. Ebenso ist selbstverständlich auch die Verwendung von invertierten Pseudo-Zufallsfolgen möglich.

Sonstige vorteilhafte Weiterbildungen der Erfindung sind in den Unteransprüchen angegeben.

Die Erfindung wird anhand von Ausführungsbeispielen näher erläutert.

Es zeigen

Figur 1 das Prinzipschaltbild eines PCM-Systems,

Figur 2 ein Prinzipschaltbild eines Pseudo-Zufallsgenerators,

Figur 3 ein Ausführungsbeispiel eines rückgesetzten Verwürflers,

Figur 4 ein weiteres Ausführungsbeispiel des Verwürflers und

Figur 5 ein drittes Ausführungsbeispiel des Verwürflers.

Fig. 1 zeigt ein PCM-System. Dem Sendeteil SE des PCM-Systems werden parallel binäre Digitalsignale über die Eingänge E1 bis E4 zugeführt. Diese Eingänge sind jeweils mit einem Eingang eines Modulo-2-Addierers MO1 bis MO4 verbunden ; der zweite Eingang EM1, EM2, EM3, EM4 jedes Molulo-2-Addierers ist mit einem Verwürfler SC verbunden. Die Ausgänge der Modulo-2-Addierer MO1 bis MO4 sind mit den Eingängen D0 bis D3 eines Multiplexers MUX verbunden, dessen Ausgang A ein serielles Binärsignal SB abgibt. Über einen Digitalsignalkanal K gelangt dieses Signal zum Eingang E des PCM-Empfangsteiles EM. Der Eingang E ist auf einen Demultiplexer DMUX geführt. Dessen Ausgänge Q0 bis Q3 sind jeweils mit einem Eingang eines Modulo-2-Addierers M11 bis M14 verbunden. Die zweiten Eingänge jedes Modulo-2-Addierers sind mit einem Entwürfler DSC verbunden. Die Ausgänge der Modulo-2-Addierer M11 bis M14 sind auf Anschlußpunkte A1 bis A4 geführt. Der Eingang E des PCM-Empfangsteils ist mit einer Rahmensynchronisiereinrichtung RSY verbunden, die den Entwürfler DSC in die gewünschte Ausgangsposition stellt.

An den Eingängen E1 bis E4 des PCM-Sendeteils liegen binäre Digitalsignale BS1 bis BS4 an. Diese binären Digitalsignale gelangen zu jeweils einem Modulo-2-Addierer MO1 bis MO4. Der Verwürfler SC erzeugt an seinen Ausgängen Pseudo-Zufallsfolgen binärer Signale, die auf die Eingänge EM1 bis EM4 der Modulo-2-Addierer MO1 bis MO4 geführt sind. Mit diesen Pseudo-Zufallsfolgen werden die binären Digitalsignale BS1 bis BS4 verwürfelt und gelangen dann zu den Eingängen D0 bis D3 des Multiplexers MUX. Hier werden sie, zeitlich ineinander verschachtelt, als serielles Binärsignal SB vom Ausgang A des Multiplexers ausgegeben. Über einen Digitalsignalkanal K (Modulations- und Demodulationseinrichtungen werden hierbei als selbstverständlich vorausgesetzt) gelangen sie zu dem Eingang E des PCM-Empfangsteiles EM. Im Demultiplexer DMUX werden aus dem seriellen Binärsignal wieder vier Digitalsignale DS1 bis DS4 gewonnen, die von den Ausgängen Q0 bis Q3 des Demultiplexers DMUX abgegeben werden. Der Demultiplexer DMUX enthält Kippstufen als Speicherelemente, so daß die Digitalsignale DS1 bis DS4 parallel ausgegeben werden. Um die ursprünglichen Binärsignale BS1 bis BS4 zurückgewinnen, ist es erforderlich, die Digitalsignale DS1 bis DS4 zu entwürfeln. Dies geschieht in den Modulo-2-Addierern MO11 bis MO14. Der Entwürfler DSC gibt hierzu dieselben Pseudo-Zufallsfolgen wie der sendeseitige Verwürfler SC ab. Die Eingänge EM11 bis EM14 der Modulo-2-Addierer MO11 bis MO14 entsprechen den Eingängen EM1 bis EM4 der Modulo-2-Addierer im Verwürfler. An ihren Ausgängen A1 bis A4 liegen deshalb wieder die ursprünglichen binären Digitalsignale BS1 bis BS4. Die Rahmenwortsynchronisierung RSY setzt den Descrambler in eine gewünschte Ausgangsposition, wenn sie ein bestimmtes Rahmenkennungswort periodisch wiederkehrend erkennt.

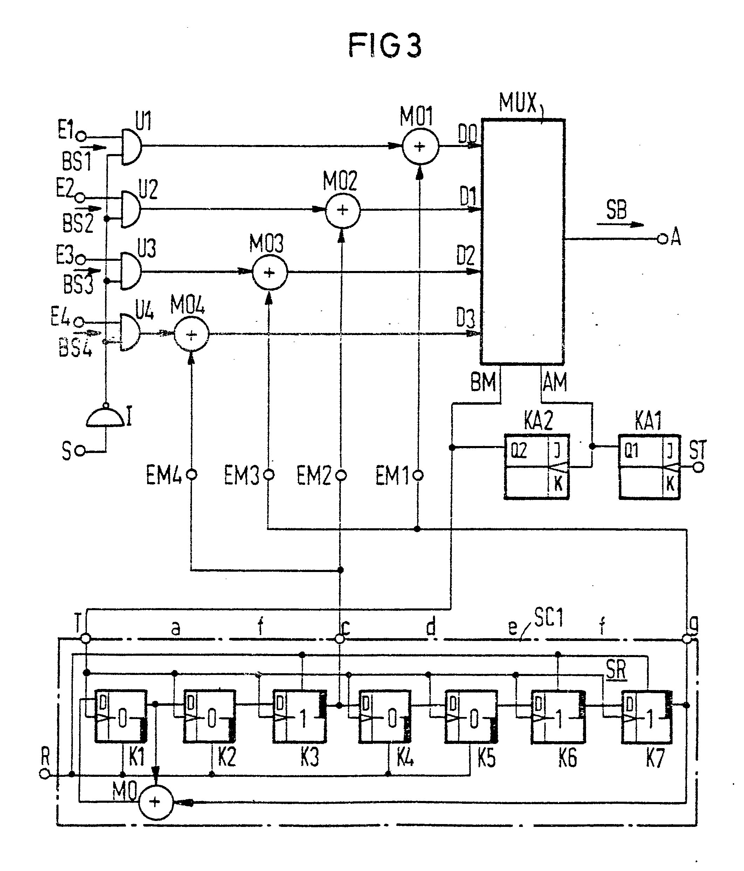

Fig. 2 zeigt das Prinzipschaltbild eines erfindungsgemäßen Pseudo-Zufallsgenerators für einen Verwürfler. Der Zufallsgenerator besteht aus einem Schieberegister, das sieben D-Kippstufen K1 bis K7 enthält. Der Ausgang a der ersten Kippstufe K1 und der Ausgang g der siebten Kippstufe K7 ist mit jeweils einem Eingang eines Modulo-2-Addierers MO verbunden, dessen Ausgang auf den D-Eingang der ersten Kippstufe K1 geführt ist. Alle Kippstufen K1 bis K7 werden über einen gemeinsamen Takteingang T angesteuert und sind über einen gemeinsamen Rücksetzeingang R in eine bestimmte Anfangsposition, hier die logische Eins, einstellbar. Die Ausgänge a, c, e, g der Kippstufen K1, K3, K5 und K7 sind herausgeführt. Der Pseudo-Zufallsgenerator erzeugt in an sich bekannter Weise am Ausgang jeder Kippstufe eine Pseudo-Zufallsfolge logischer Nullen und logischer Einsen. Zum parallelen Verwürfeln von Digitalsignalen werden mehrere Kippstufenausgänge, hier vier unterschiedliche, verwendet. Die Ausgänge a, c, e und g sind an die zweiten Eingänge EM1 bis EM4 des ersten bis vierten Modulo-2-Addierers MO1 bis MO4 in Fig. 1 angeschlossen. Die binären Digitalsignale BS1 bis BS4 werden demnach zeitlich verzögert mit derselben Pseudo-Zufallsfolge verwürfelt. Werden den Modulo-2-Addierern MO1 bis MO4 als Digitalsignale Dauerlagen zugeführt, so entsteht am Ausgang des Multiplexers MUX jedoch keine reine Pseudo-Zufallsfolge, sondern eine serielle Binärfolge, die nur einen annähernd zufälligen Charakter aufweist. Bestimmte 0,1-Folgen treten nicht auf. Dies wird in dem Ausführungsbeispiel nach Fig. 3 zur Erzeugung einer bestimmten Synchronisierfolge ausgenutzt.

In Fig. 3 ist der PCM-Sendeteil eines Ausführungsbeispiels dargestellt. An vier Eingängen E1 bis E4 liegen vier binäre Digitalsignale BS1 bis BS4 an. Die Eingänge E1 bis E4 sind auf jeweils einen Eingang eines UND-Gatters U1 bis U4 geführt. Der zweite Eingang jedes UND-Gatters ist über einen Inverter I auf einen Synchroneingang S geführt. Die Ausgänge der UND-Gatter U1 bis U4 sind mit jeweils einem Eingang der Modulo-2-Addierer MO1 bis MO4 verbunden. Die zweiten Eingänge der Modulo-2-Addierer MO1 bis MO4 sind an die Ausgänge eines Verwürflers SC1 angeschlossen. Dieser Verwürfler SC1 entspricht weitgehend dem in Fig. 1 beschriebenen Verwürfler SC. Es sind lediglich die Setz- bzw. Rücksetzeingänge der Kippstufen K1 bis K7 teilweise anders an den gemeinsamen Rücksetzeingang R angeschlossen. Durch einen Impuls auf dem Rücksetzeingang wird die Folge 0010011 als Angangswert in den Kippstufen K1 bis K7 eingestellt. Der Ausgang g der siebten Kippstufe K7 ist mit jeweils einem zweiten Eingang der Modulo-2-Addierer MO1 BIS MO3 verbunden, der Ausgang c der dritten Kippstufe K3 ist mit jeweils einem Eingang des zweiten und vierten Modulo-2-Addierers MO2 und MO4 verbunden. Die Ausgänge der Modulo-2-Addierer MO1 bis MO4 sind jeweils auf die Eingänge D0 bis D3 des Multiplexers MUX geführt, an dessen Ausgang A ein serielles Binärsignal SB abgegeben wird. An die Adreßeingänge AM und BM des Multiplexers MUX sind die Ausgänge zweier als Viererteiler geschalteter Teilerkippstufen KA1 und KA2 verbunden. Der Ausgang Q1 der ersten Teilerkippstufe KA1 ist hierbei mit dem Adreßeingang AM verbunden und auf den Takteingang der zweiten Teilerkippstufe KA2 geführt. Der Ausgang Q2 der zweiten Teilerkippstufe KA2 ist an den Adreßeingang BM des Multiplexers angeschlossen und mit dem Takteingang T des Verwürflers SC1 verbunden. Der Takteingang der ersten Teilerkippstufe KA1 ist auf einen Anschlußpunkt ST herausgeführt.

Die Funktion des PCM-Sendeteils gleicht prinzipiell der Funktion des in Fig. 1 beschriebenen Sendeteiles SE. Dem Takteingang der Teilerkippstufe KA1 wird ein Taktsignal mit der Übertragungsfrequenz des seriellen Binärsignals SB zugeführt. Die Ausgänge der Kippstufen KA1 und KA2 nehmen nacheinander die Zustände 00, 10, 01, 11 an, wodurch die an den Eingängen D0 bis D3 des Multiplexers MUX liegenden Signale in serieller Folge an den Ausgang A durchgeschaltet werden. Anschließend geht der Ausgang Q2 der Teilerkippstufe KA2 von der logischen Eins wieder auf die logische Null. Dadurch wird ein Taktimpuls für den Verwürfler SC1 wirksam und der Verwürfler wird in seinen nächsten Zustand weitergeschaltet. An den Eingängen E1 bis E4 liegen die nächsten Bits der binären Digitalsignale BS1 bis BS4 an, die jetzt entsprechend dem neuen Zustand des Verwürflers über den Multiplexer MUX ausgesendet werden. Dieser Vorgang wiederholt sich, solange binäre Digitalsignale ausgesendet werden.

Um den empfangsseitigen Entwürfler zu synchronisieren, ist es üblich, am Anfang jedes Digitalsignalrahmens ein sogenanntes Rahmenkennungswort auszusenden, das aus einer bestimmten 0,1-Folge besteht. Als Rahmenkennungswort wird vom CCITT, Vol. III-2, Rec. G.751 die Synchronisierfolge 1111 1010 0000 vorgeschlagen, die auch in allen Ausführungsbeispielen erzeugt wird. Die binären Digitalsignale BS1 bis BS4 werden über ein für die Dauer der Aussendung des Rahmenkennungswortes an dem Eingang S anliegendes, die logische Eins darstellendes Synchronfolgesignal gesperrt. An jeweils einem Eingang der Modulo-2-Addierer MO1 bis MO4 liegt deshalb die logische Null an. Um die vorgegebene Synchronisierfolge am Ausgang des Multiplexers zu erhalten, müssen die vier zweiten Eingänge EM1 bis EM4 der Modulo-2-Addierer MO1 bis MO4 daher folgende Bitkombinationen aufweisen:

|       | EM1 | EM2 | EM3 | EM4 |
|-------|-----|-----|-----|-----|
| $t_0$ | 1   | 1   | 1   | 1   |
| $t_1$ | 1   | 0   | 1   | 0   |
| $t_2$ | 0   | 0   | 0   | 0   |

Dies wird erreicht, indem zu Beginn der Aussendung des Rahmenkennungswortes der Verwürfler SC1 durch einen kurzen Rücksetzimpuls (Zeitpunkt $t_0$) über seinen Rücksetzeingang R in die dargestellte Ausgangslage 0010011 gesetzt wird.

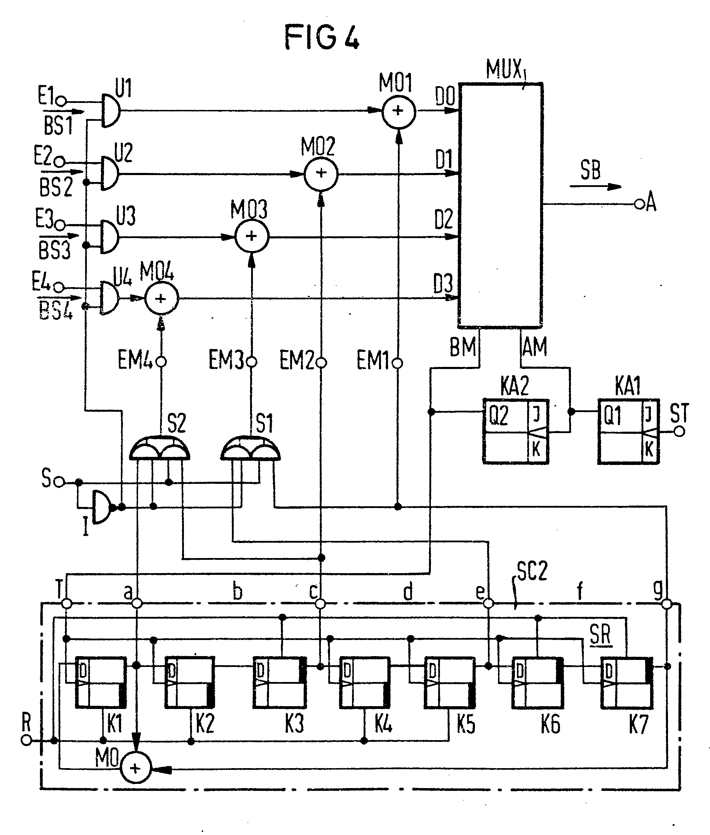

Sind jedoch als binäre Digitalsignale längere Zustände von logischen Nullen an den Eingängen E1 bis E4 zugelassen, so wird das Rahmenkennungswort jeweils nach einer gesamten Periode des Verwürflers SC1 ausgesendet. Um dies zu vermeiden, sind in einem weiteren Ausführungsbeispiel nach Fig. 4 besondere Schaltungsmaßnahmen getroffen worden.

Das Ausführungsbeispiel nach der Fig. 4 ist weitgehend mit dem in Fig. 3 dargestellten Ausführungsbeispiel identisch. Der zweite Eingang EM2 des zweiten Modulo-2-Addierers MO2 ist jedoch an dem Ausgang c der dritten Kippstufe K3 des Verwürflers SC2 angeschaltet. Über einen ersten elektronischen Umschalter S1 ist bei der Aussendung von binären Digitalsignalen, hierbei liegt am Synchroneingang S des PCM-Sendeteils die logische Null, der zweite Eingang EM3 des dritten Modulo-2-Addierers MO3 ist mit dem Ausgang e der fünften Kippstufe K5 verbunden und der zweite Eingang EM4 des vierten Modulo-2-Addierers MO4 ist über einen zweiten elektronischen Umschalter S2 mit dem Ausgang a der ersten Kippstufe K1 verbunden, während bei der Aussendung des Rahmenkennungswortes, hierbei liegt am Synchroneingang S die logische Eins, der zweite Eingang EM3 des dritten Modulo-2-Addierers MO3 mit dem Ausgang g der siebten Kippstufe K7 und der zweite Eingang EM4 des zweiten Modulo-2-Addierers MO4 mit dem Ausgang c der dritten Kippstufe K3 verbunden ist. Als elektronische Umschalter werden UND-ODER-Gatter verwendet, wobei jeweils ein UND-Gatter jedes elektronischen Umschalters freigegeben ist, während das zweite UND-Gatter über einen Inverter I gesperrt ist. Gesteuert werden die elektronischen Umschalter von dem am Synchroneinang S anliegenden Synchronfolgesignal. Bei der Aussendung des Rahmenkennungswortes weisen beide Ausführungsbeispiele die gleiche Funktion auf. Durch die andersartige Verwürfelung bei der Aussendung von binären Digitalsignalen ist jedoch sichergestellt, daß auch beliebige Dauerlagen an den Eingängen E1 bis E4 nicht zur Vortäuschung des angegebenen Rahmenkennungswortes führen. Als nachteilig erweisen sich jedoch die Laufzeiten der elektronischen Schalter S1 und S2.

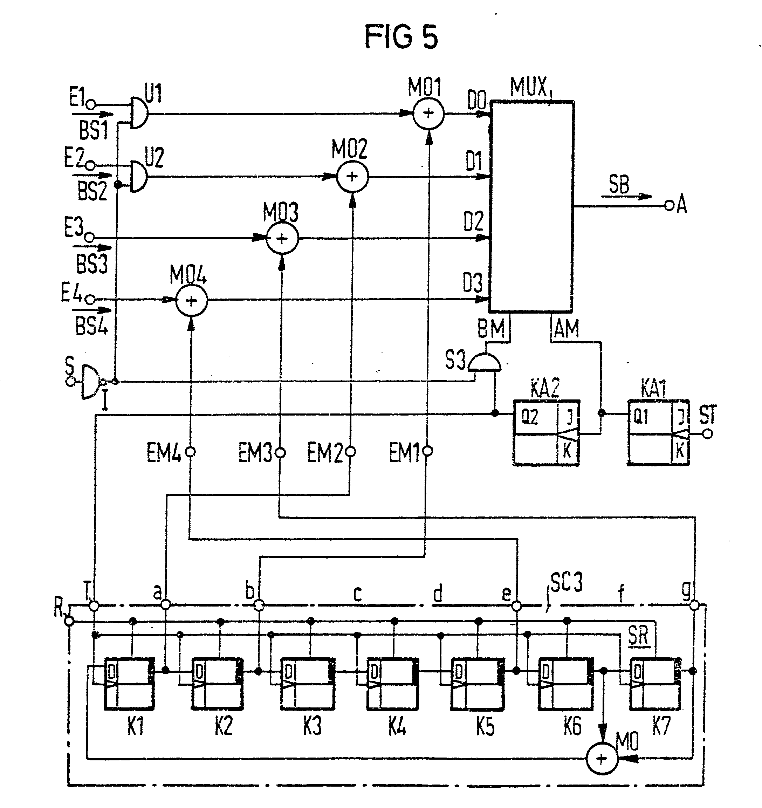

In Fig. 5 ist deshalb ein Ausführungsbeispiel dargestellt, das diesen Nachteil vermeidet. Dieses Ausführungsbeispiel gleicht im Aufbau dem Ausführungsbeispiel nach Fig. 3.

Der Ausgang Q2 der Teilerkippstufe KA2 ist jedoch über ein zusätzliches UND-Gatter S3 mit dem Adreßeingang BM des Multiplexers MUX verbunden. Der zweite Eingang des zusätzlichen UND-Gatters S3 ist mit dem Ausgang des Inverters I verbunden. Die UND-Gatter U3 und U4 entfallen. Der zweite Eingang EM1 des ersten Modulo-2-Addierers MO1 ist jedoch mit dem Ausgang b der zweiten Kippstufe K2 des Verwürflers SC3 verbunden, der zweite Eingang EM2 des zweiten Modulo-2-Addierers MO2 ist mit dem Ausgang a der ersten Kippstufe K1 verbunden, der zweite Eingang EM3 des dritten Modulo-2-Addierers MO3 ist mit dem Ausgang g der siebten Kippstufe K7 verbunden und der zweite Eingang EM4 des zweiten Modulo-2-Addierers MO4 ist mit dem Ausgang e der fünften Kippstufe K5 verbunden. Die Rückkopplung des Verwürflers SC3 ist ebenfalls geändert, und zwar werden die Ausgänge f und g der sechsten und siebten Kippstufe K6 und K7 auf die Eingänge des Modulo-2-Addierers MO geschaltet, dessen Ausgang an den D-Eingang der ersten Kippstufe K1 angeschlossen ist.

Die Aussendung von Digitalsignalen vollzieht sich in der bereits beschriebenen Weise. Wird das Rahmenkennungswort ausgesendet, so werden durch ein am Eingang S anliegendes Synchronfolgesignal wieder die binären Digitalsignale BS1 und BS2 abgeschaltet; gleichzeitig wird jedoch an den höherwertigen Adreßeingang BM des Multiplexers MUX über das zusätzliche UND-Gatter S3 die logische Null angelegt. Dadurch werden nur die am Eingang D0 und am Eingang D1 anliegenden Signale am Ausgang A des Multiplexers MUX angegeben. Die Ausgänge a bis g der Kippstufen K1 bis K7 werden durch einen kurzen Impuls am Rücksetzeingang R zu Beginn des Synchronfolgesignals auf die logische Eins gestellt. Zuerst werden, nur die Kippstufen K1 und K2 sind ja an der Erzeugung des Rahmenkennungswortes beteiligt, vier logische Einsen generiert. Über den D-Eingang der ersten Kippstufe K1 werden vorerst Nullen nachgeschoben. Dadurch ergibt sich als serielles Binärsignal am Ausgang A des Multiplexers MUX wieder das Rahmenkennungswort. Bei diesem Ausführungsbeispiel kann als Schieberegister SR ein integrierter Baustein mit gemeinsamem Setz- oder Rücksetzeingang verwendet werden. Die Ausgänge des Verwürflers SC3 wurden so gewählt, daß das Rahmenkennungswort auch bei beliebigen Dauerlagen an den Eingängen E1 bis E4 vermieden ist.

Der Entwürfler auf der Empfangsseite ist stets analog zu dem der Sendeseite aufgebaut.

### Ansprüche

1. PCM-System mit einem Sendeteil (SE) zum parallelen Verwürfeln von n binären Digitalsignalen (BS1 bis BS4), die jeweils einem ersten Eingang von n Modulo-2-Addierern (MO1 bis MO4) zugeführt sind, deren Ausgänge zur Bildung eines seriellen Binärsignals (SB) mit den Eingängen (D0 bis D3) eines Multiplexers (MUX) verbunden sind und deren zweite Eingänge (EM1 bis EM4) an die Ausgänge (a, c, d, g) eines Verwürflers (SC) angeschlossen sind, die von den Kippstufen (K1 bis K7) eines rückgekoppelten Schieberegisters (SR) gebildet werden, und mit einem dem Sendeteil (SE) entsprechenden Empfangsteil (EM), der einen Demultiplexer (DMUX) und einen synchronisierten Entwürfler (DSC) enthält, dadurch gekennzeichnet, daß im Rückkopplungsweg des Schieberegisters nur ein Modulo-2-Addierer (MO) liegt, daß zur Erzeugung einer vorgegebenen Synchronisierfolge die Aussendung der binären Digitalsignale (BS1 bis BS4) gesperrt wird und daß die Kippstufen (K1 bis K7) Setzeingänge aufweisen, die über einen gemeinsamen Rücksetzeingang (R) zusammengefaßt sind und zur Erzeugung der Synchronisierfolge durch einen Impuls so eingestellt werden, daß die vom Verwürfler abgegebenen Pseudo-Zufallsfolgen nach ihrer Zusammenfassung am Ausgang des Multiplexers (MUX) die Synchronisierfolge bilden.

2. PCM-System nach Anspruch 1, dadurch gekennzeichnet, daß zur Erzeugung einer Pseudo-Zufallsfolge das Schieberegister (SR) sieben Kippstufen (K1 bis K7) enthält, daß die Ausgänge (a und g) der ersten Kippstufe (K1) und der siebten Kippstufe (K7) mit den beiden Eingängen des Modulo-2-Addierers (MO) verbunden sind, daß der Ausgang dieses Modulo-2-Addierers auf den D-Eingang der ersten Kippstufe (K1) geführt ist, daß vier Modulo-2-Addierer (MO1 bis MO4) über vier UND-Gatter (U1 bis U4) jeweils ein Digitalsignal (BS1 bis BS4) zugeführt ist, daß die zweiten Eingänge der UND-Gatter (U1 bis U4) gemeinsam über einen Inverter (I) an einen Synchroneingang (S) angeschaltet sind, daß der zweite Eingang (EM1) des ersten Modulo-2-Addierers (MO1) und der zweite Eingang (EM3) des dritten Modulo-2-Addierers (MO3) mit dem

Ausgang der siebten Kippstufe (K7) verbunden sind, daß die zweiten Eingänge (EM2 und EM4) des zweiten und vierten Modulo-2-Addierers (MO2 und MO4) mit dem Ausgang (c) der dritten Kippstufe (K3) verbunden sind und daß während der Aussendung der Synchronisierfolge die UND-Gatter (U1 bis U4) von einem am Synchroneingang (S) anliegenden Synchronfolgesignal gesperrt sind (Fig. 3).

3. PCM-System nach Anspruch 1 oder 2, dadurch gekennzeichnet, daß mindestens eine Umschaltvorrichtung (S1, S2, S3) vorgesehen ist, die zur Erzeugung einer vorgegebenen Synchronisierfolge Dauerlagen mit denselben Pseudo-Zufallsfolgen wie bei der Aussendung binärer Digitalsignale (BS1, BS2, ..., BSn) verwendet, diese jedoch in zeitlich veränderter Form miteinander verschachtelt.

4. PCM-System nach Anspruch 2 oder 3, dadurch gekennzeichnet, daß zwei elektronische Umschalter (S1, S2) vorgesehen sind, die durch das am Synchroneingang (S) anliegende Synchronfolgesignal betätigt werden, daß ständig der Ausgang (g) der siebten Kippstufe (K7) mit dem zweiten Eingang (EM1) des ersten Modulo-2-Addierers (MO1) sowie der Ausgang (c) der dritten Kippstufe (K3) mit dem zweiten Eingang (EM2) des zweiten Modulo-2-Addierers (MO2) verbunden ist, daß bei fehlendem Synchronfolgesignal über den ersten Umschalter (S1) der Ausgang (e) der fünften Kippstufe (K5) mit dem zweiten Eingang (EM3) des dritten Modulo-2-Addierers (MO3) verbunden ist sowie der Ausgang (a) der ersten Kippstufe (K1) mit dem zweiten Eingang (EM4) des vierten Modulo-2-Addierers (MO4) verbunden ist und daß bei vorhandenem Synchronfolgesignal der Ausgang (g) der siebten Kippstufe (K7) über den ersten Umschalter (S1) auch mit dem zweiten Eingang (EM3) des dritten Modulo-2-Addierers (MO3) verbunden ist sowie der Ausgang (c) der dritten Kippstufe (K3) über den zweiten Umschalter (S2) auch mit dem zweiten Eingang (EM4) des vierten Modulo-2-Addierers (MO4) verbunden ist (Fig. 4).

5. PCM-System nach Anspruch 3, dadurch gekennzeichnet, daß ein siebenstufiges Schieberegister (SR) in einem Verwürfler (SC3) vorgesehen ist, daß die Ausgänge (f und g) der sechsten und siebten Kippstufe (K6 und K7) über einen Modulo-2-Addierer (MO) auf den D-Eingang der ersten Kippstufe (K1) zurückgeführt sind, daß einem ersten und einem zweiten Modulo-2-Addierer (MO1 und MO2) zwei binäre Digitalsignale (BS1 und BS2) über zwei UND-Gatter (U1, U2) zugeführt sind und einem dritten und einem vierten Modulo-2-Addierer (MO3, MO4) zwei weitere Digitalsignale (BS3 und BS4) zugeführt sind, daß der Ausgang (b) der zweiten Kippstufe (K2) mit dem zweiten Ausgang (EM1) des ersten Modulo-2-Addierers (MO1), der Ausgang (a) der ersten Kippstufe (K1) mit dem zweiten Eingang (EM2) des zweiten Modulo-2-Addierers (MO3) verbunden ist und der Ausgang (e) der fünften Kippstufe (K5) mit dem zweiten Eingang (EM4) des vierten Modulo-2-Addierers (MO4) verbunden ist, daß die Ausgänge des ersten bis vierten Modulo-2-Addierers (MO1 bis MO4) mit den Eingängen (D0 bis D3) eines Multiplexers (MUX) verbunden sind, dessen höherwertiger Adresseneingang (BM) über ein zusätzliches UND-Gatter (S3) mit den zweiten Eingängen der zwei UND-Gatter (U1 und U2) und über einen Inverter (I) mit dem Synchroneingang (S) verbunden ist und daß die Ausgänge (a bis g) aller Kippstufen (K1 bis K7) des Schieberegisters (SR) über den Rücksetzeingang (R) auf die logische Eins einstellbar sind.

6. PCM-System nach einem der vorhergehenden Ansprüche 2 bis 4, dadurch gekennzeichnet, daß ein Rücksetzeingang (R) des Schieberegisters (SR) vorgesehen ist, daß die Kippstufen (K1 bis K7) des Schieberegisters über einen am Rücksetzeingang (R) anliegenden Rücksetzimpuls in die Ausgangslange 0010011 oder 0011011 rückgestellt werden.

**Claims**

1. A PCM-system having a transmitting section (SE) for the parallel scrambling of n binary digital signals (BS1 to BS4), which are respectively fed to a first input of n modulo-2-adders (MO1 to MO4) whose outputs, in order to form a serial binary signal (SB), are connected to the inputs (D0 to D3) of a multiplexer (MUX) and whose second inputs (EM1 to EM4) are connected to the outputs (a, c, d, g) of a scrambler (SC) which are formed by the flip-flops (K1 to K7) of a shift register (SR) provided with feed-back; and with a receiving section (EM) which corresponds to the transmitting section (SE) and which includes a demultiplexer (DMUX) and a synchronised descrambler (DSC), characterised in that the feed-back path of the shift register contains only one modulo-2-adder (MO), that in order to produce a predetermined synchronising sequence the transmission of the binary digital signals (BS1 to BS4) is blocked, and that the flip-flops (K1 to K7) have setting inputs which are combined via a common resetting input (R) and in order that the synchronising sequence may be produced are set by a pulse in such manner that the pseudo-random sequences emitted by the scrambler, having been combined, form the synchronising sequence at the output of the multiplexer (MUX).

2. PCM-system as claimed in claim 1, characterised in that in order that a pseudo-random sequence may be produced the shift register (SR) includes seven flip-flops (K1 to K7), that the outputs (a and g) of the first flip-flop (K1) and of the seventh flip-flop (K7) are connected to the two inputs of the modulo-2-adder (MO), that the output of this modulo-2-adder leads to the D-input of the first flip-flop (K1), that four modulo-2-adders (MO1 to MO4) are respectively supplied via four AND-gates (U1 to U4) with a digital signal (BS1 to BS4), that the second inputs of the AND-gates (U1 to U4) are commonly connected via an inverter (I) to a synchronising input (S), that the second input (EM1) of the first modulo-2-adder (MO1) and the second input (EM3) of the third modulo-2-adder (MO3) are connected to the output of the seventh flip-flop (K7), that the second inputs (EM2 and EM4) of the second and fourth modulo-2-adders (MO2 and MO4) are connected to the output (c) of the third flip-flop (K3), and that during the transmission of the synchronising sequence the AND-gates (U1 to U4) are blocked by a synchronising-sequence-signal present at the synchronising input (s) (Fig. 3).

3. PCM-system as claimed in claim 1 or 2, characterised in that at least one switch-over device (S1, S2, S3) is provided which, in order to produce a predetermined synchronising sequence, employs continuous states with the same pseudo-random sequences as in the case of the transmission of binary digital signals (BS1, BS2, ..., BSn) although these are interlaced with one another differently in terms of time.

4. PCM-system as claimed in claim 2 or 3, characterised in that two electronic change-over switches (S1, S2) are provided which are actuated by the synchronous sequence signal present at the synchronising input (S), that constantly the output (g) of the seventh flip-flop (K7) is connected to the second input (EM1) of the first modulo-2-adder (MO1) and the output (c) of the third flip-flop (K3) is connected to the second input (EM2) of the second modulo-2-adder (MO2), that when the synchronising sequence signal is absent via the first change-over switch (S1) the output (e) of the fifth flip-flop (K5) is connected to the second input (EM3) of the third modulo-2-adder (MO3) and the output (a) of the first flip-flop (K1) is connected to the second input (EM4) of the fourth modulo-2-adder (MO4), and that when the synchronising sequence signal is present the output (g) of the seventh flip-flop (K7) is also connected via the first change-over switch (S1) to the second input (EM3) of the third modulo-2-adder (MO3) and the output (c) of the third flip-flop (K3) is also connected via the second change-over switch (S2) to the second input (EM4) of the fourth modulo-2-adder (MO4) (Fig. 4).

5. PCM-system as claimed in claim 3, characterised in that a seven-stage shift register (SR) is provided in a scrambler (SC3), that the outputs (f and g) of the sixth and seventh flip-flops (K6 and K7) lead back via a modulo-2-adder (MO) to the D-input of the first flip-flop (K1), that a first and a second modulo-2-adder (MO1 and MO2) are supplied with two binary digital signals (BS1 and BS2) via two AND-gates (U1, U2), and a third and a fourth modulo-2-adder (MO3, MO4) are supplied with two further digital signals (BS3 and BS4), that the output (b) of the second flip-flop (K2) is connected to the second output (EM1) of the first modulo-2-adder (MO1), the output (a) of the first flip-flop (K1) is connected to the second input (EM2) of the second modulo-2-adder (MO3), and the output (e) of the fifth flip-flop (K5) is connected to the second input (EM4) of the fourth modulo-2-adder (MO4), that the outputs of the first to fourth modulo-2-adders (MO1 to MO4) are connected to the inputs (D0 to D3) of a multiplexer (MUX) whose higher-value address input (BM) is connected via an additional AND-gate (S3) to the second inputs of the two AND-gates (U1 and U2) and via an inverter (I) to the synchronising input (S), and that the outputs (a to g) of all the flip-flops (K1 to K7) of the shift register (SR) can be set at logic one via the resetting input (R).

6. PCM-system as claimed in one of the preceding claims 2 to 4, characterised in that the shift register (SR) is provided with a resetting input (R), that the flip-flops (K1 to K7) of the shift register are reset into the starting state 0010011 or 0011011 via a resetting pulse present at the resetting input (R).

## Revendications

1. Système MIC comportant une partie émission (SE) servant à réaliser le brouillage en parallèle de n signaux numériques binaires (BS1 à BS4), qui sont envoyés respectivement à des premières entrées de n additionneurs modulo 2 (MO1 à MO4), dont les sorties sont reliées, pour la formation d'un signal binaire en série (SB), aux entrées (D0 à D3) d'un multiplexeur (MUX), et dont les secondes entrées (EM1 à EM4) sont raccordées aux sorties (a, c, d, g) d'un dispositif embrouilleur (SC), qui sont formées par des étages à bascule bistable (Q1 à Q7) d'un registre à décalage (SR) couplé par réaction, et comportant une partie réception (EM) correspondant à la partie émission (SR) et qui contient un démultiplexeur (DMUX) et un dispositif désembrouilleur synchronisé (DSC), caractérisé par le fait que seul un additionneur modulo 2 (MO) est situé dans la voie de réaction du registre à décalage, que l'émission des signaux numériques binaires (BS1 à BS4) est bloquée, pour la production d'une suite à synchronisation prédéterminée, et que les étages à bascule bistable (K1 à K7) comportent des entrées de positionnement qui sont réunies par l'intermédiaire d'une entrée commune (R) de remise à l'état initial et sont réglées pour la production à la suite de synchronisation par une impulsion de telle sorte que les suites pseudo-aléatoires délivrées par le dispositif embrouilleur forment après la réunion à la sortie du multiplexeur (MUX), la suite de synchronisation.

2. Système MIC suivant la revendication 1, caractérisé par le fait que pour la production d'une suite pseudo-aléatoire, le registre à décalage (ZR) contient sept étages à bascule bistable (K1 à K7) que les sorties (a et g) du premier étage à bascule bistable (K1) et du septième étage à bascule bistable (K7) sont reliées aux deux entrées de l'additionneur modulo 2 (MO), que la sortie de cet additionneur modulo 2 est reliée à l'entrée D du premier étage à bascule bistable (K1), que des signaux numériques respectifs (BS1 à BS4) sont envoyés à quatre additionneurs modulo 2 (MO1 à MO4) par l'intermédiaire de quatre circuits ET (U1 à U4), que les secondes entrées des circuits ET (U1 à U4) sont raccordées en commun par l'intermédiaire d'un inverseur (I) à une entrée de synchronisation (S), et que la seconde entrée (EM1) du premier additionneur modulo 2 (MO1) et la seconde entrée (EM3) du troisième additionneur modulo 2 (MO3) du troisième additionneur modulo 2 (MO3) sont reliées à la sortie du septième étage à bascule bistable (K7), que les deux entrées (EM2 et EM4) du second et du quatrième additionneurs modulo 2 (MO2 et MO4) sont reliées à la sortie (c) du troisième étage à bascule bistable (A3) et que pendant l'émission de la suite de synchronisation, les circuits ET (U1 à U4) sont bloqués par un signal de suite de synchronisation présent à l'entrée de synchronisation (S) (Fig. 3).

3. Système MIC suivant la revendication 1 ou 2, caractérisé par le fait qu'il est prévu au moins un dispositif de commutation (S1, S2, S3), qui, pour la production d'une suite de synchronisation prédéterminée, utilise des états permanents avec les mêmes suites pseudo-aléatoires que dans le cas de l'émission de signaux numériques binaires (BS1, BS2, ..., BSn), mais que ces dernières sont imbriquées entre elles selon une forme modifiée dans le temps.

4. Système MIC suivant l'une des revendications 2 ou 3, caractérisé par le fait qu'il est prévu deux commutateurs électroniques (S1, S2), qui sont actionnés par le signal de suite de synchronisation présent à l'entrée de synchronisation (S), qu'en permanence la sortie (g) du septième étage à bascule bistable (K7) est relié à la seconde entrée (EM1) du premier additionneur modulo 2 (MO1) et que la sortie (c) du troisième étage à bascule bistable (K3) est reliée en permanence à la seconde entrée (MO2) du second additionneur modulo 2 (MO2), que dans le cas de l'absence du signal de suite de synchronisation, la sortie (e) du cinquième étage à bascule bistable (K5) est reliée par l'intermédiaire du premier commutateur (S1) à la seconde entrée (EM3), du troisième additionneur modulo 2 (MO3) et que la sortie (a) du premier étage à bascule bistable (K1) est reliée à la seconde entrée (EM4) du quatrième additionneur modulo 2 (MO4), et que, lors de la présence du signal de suite de synchronisation, la sortie (g) du septième étage à bascule bistable (K7) est également reliée par l'intermédiaire du premier commutateur (K7) à la seconde entrée (EM3) du troisième additionneur modulo 2 (MO3) et que la sortie (c) du troisième étage à bascule bistable (K3) est également reliée par l'intermédiaire du second commutateur (S2) à la seconde entrée (EM4) du quatrième étage additionneur modulo 2 (MO4) (Fig. 4).

5. Système MIC suivant la revendication 3, caractérisé par le fait qu'il est prévu un registre à décalage (SR) à sept étages dans un dispositif de brouillage (SC3), que les sorties (f et g) des sixième et septième étages à bascule bistable (K6 et K7) sont reliées en retour par l'intermédiaire d'un additionneur modulo 2 (MO) à l'entrée (D) du premier étage à bascule bistable (K1), que deux signaux numériques binaires (BS1 et BS2) sont envoyés à un second additionneur modulo 2 (MO1 et MO2) par l'intermédiaire de deux circuits ET (U1, U2) et que deux autres signaux numériques (BS3 et BS4) sont envoyés à un troisième et à un quatrième additionneur modulo 2 (MO3, MO4), que la sortie (b) du second étage à bascule bistable (K2) est reliée à la seconde entrée (EM1) du premier additionneur modulo 2 (MO1), que la sortie (a) du premier étage à bascule bistable (K1) est relié à la seconde entrée (EM2) du second additionneur modulo 2 (MO3) et que la sortie (e) du cinquième étage à bascule bistable (K5) est reliée à la seconde entrée (EM4) du quatrième additionneur modulo 2 (MO4), que les sorties du premier jusqu'au quatrième additionneurs modulo 2 (MO1 à MO4) sont reliées aux entrées (D0 à D3) à multiplexeur (MUX), dont l'entrée d'adresses de poids supérieur (BM) est reliée par l'intermédiaire d'un circuit ET supplémentaire (S3) aux secondes entrées des deux circuits ET (U1 et U2) et par l'intermédiaire d'un inverseur (I) à l'entrée de synchronisation (S) et que les sorties (a à g) de tous les étages à bascule bistable (K1 à K7) du registre à décalage (SR) peuvent être réglés sur les uns logiques par l'intermédiaire de l'entrée (R) de remise à l'état initial.

6. Système MIC suivant l'une des revendications précédentes 2 à 4, caractérisé par le fait qu'il est prévu une entrée (R) de remise à l'état initial du registre à décalage (SR) et que les étages à bascule bistable (K1 à K7) du registre à décalage sont ramenés dans leur état initial 0010011 ou 0011011 par l'intermédiaire d'une impulsion de remise à l'état initial appliquée à l'entrée (R) de remise à l'état initial.

# FIG 1

SE        EM

# FIG 2

# FIG 3

# FIG 4

# FIG 5